(19) Europäisches Patentamt / European Patent Office / Office européen des brevets

(11) **EP 4 237 797 B1**

(12) **EUROPEAN PATENT SPECIFICATION**

(45) Date of publication and mention
of the grant of the patent:
**15.07.2026 Bulletin 2026/29**

(21) Application number: **21791013.2**

(22) Date of filing: **28.09.2021**

(51) International Patent Classification (IPC):
**G01C 21/34** $^{(2006.01)}$ **G01C 21/36** $^{(2006.01)}$

(52) Cooperative Patent Classification (CPC):
**G01C 21/3461; G01C 21/3676**

(86) International application number:
**PCT/IB2021/058837**

(87) International publication number:
**WO 2022/090830 (05.05.2022 Gazette 2022/18)**

(54) **METHOD AND DEVICE FOR DETERMINING A ROUTE**

VERFAHREN UND VORRICHTUNG ZUR BESTIMMUNG EINER ROUTE

PROCÉDÉ ET DISPOSITIF POUR LA DÉTERMINATION D'UN ITINÉRAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.11.2020 IT 202000023227**

(43) Date of publication of application:
**06.09.2023 Bulletin 2023/36**

(73) Proprietor: **Naxos Finance SA**
**1143 Luxembourg (LU)**

(72) Inventor: **QUINALE, Laura**
**10141 Torino (TO) (IT)**

(74) Representative: **Metroconsult Srl**
**Foro Bonaparte 51**
**20121 Milano (IT)**

(56) References cited:
EP-A- 2 428 770          EP-A1- 3 546 890
WO-A1-2016/135561     WO-A1-2017/120129
US-A- 5 978 731          US-A1- 2007 038 367
US-A1- 2009 222 198   US-A1- 2009 300 067
US-A1- 2010 324 817   US-A1- 2011 231 086
US-A1- 2013 024 107   US-A1- 2018 052 000
US-A1- 2019 080 266

• ANONYMOUS: "Loss function - Wikipedia", 27 October 2019 (2019-10-27), pages 1 - 7, XP055872173, Retrieved from the Internet <URL:https://en.wikipedia.org/w/index.php? title=Loss_function&oldid=923210179> [retrieved on 20211213]

**Description**

TECHNICAL FIELD

The present invention relates to a method and a device configured for determining and recommending an alternative route that can minimize kinetosis-related troubles suffered by the passengers of a vehicle, e.g. an autonomous vehicle.

BACKGROUND ART

Vehicles are known, in particular wheel-equipped vehicles such as motorcycles, cars and trucks, which comprise electronic devices adapted to determine and/or recommend and/or display routes stretching between a starting point and a destination point. Such devices may either be a part of the vehicle, i.e. pre-installed, or be sold separately, and are commonly referred to as satellite navigators or GPS navigators. The functions of such electronic devices are also provided by latest-generation smartphones or mobile phones.

The GPS navigators currently known in the art offer the possibility of setting a place of departure and/or a place of arrival, with the further possibility of entering intermediate stops along the route. After having computed the possible routes leading to the place of arrival from the place of departure, GPS navigators allow the user to select a preferred route among the available ones, e.g. the shortest route, the fastest route, etc.

GPS navigators also allow deciding whether, when calculating the possible routes, specific conditions, such as toll roads, ferries, etc., should be avoided or not.

It is known that between a given place of departure and a given place of arrival several routes or ways exist which can be followed by different vehicles, and which are recommended on the basis of the user's preferences and the vehicle type.

It is also known that a certain percentage of people are sensitive to kinetosis, commonly known as motion sickness, and that such people need to travel along routes that minimize the risk of feeling sick during the journey, irrespective of the fact that such routes may require a longer time of travel.

Document US 2011/0231086 A1 discloses a vehicle navigation system.

Document US 2007/0038367 A1 discloses a route evaluation system.

Document WO 2016/135561 A1 discloses a method and apparatus for determining a safest route within a transportation network.

Document US2009222198 A1 discloses a method of determining routes, wherein a plurality of potential routes is identified and each of said potential routes is assigned a rating as a function of its global sinuosity index. During journeys with young children on board, or for more sensitive users or those in less good health, less sinuous routes are preferred, even sometimes to the detriment of the journey time, it is thus possible to avoid the drawbacks or symptoms associated with travel sickness.

The need is therefore felt for providing a vehicle that comprises a satellite navigator or, in general, a GPS navigation system, which can help kinetosis-sensitive people select the best route that will minimize discomfort during the journey.

It is the object of the present invention to fulfil the above-mentioned needs in an optimized manner.

SUMMARY OF THE INVENTION

According to a first aspect, the present invention provides a method for identifying at least one route that will limit the oscillations of a vehicle according to claim 1.

Preferably, said method further comprises associating with each route an indication about the time of travel, with respect to the route with the shortest time of travel.

Preferably, said method further comprises filtering out those routes which extend the time of travel beyond a predefined time threshold.

Preferably, said method further comprises identifying a plurality of routes, wherein each route comprises bends whose radius of curvature is greater than a threshold radius.

Preferably, said cost function depends on the product of the number of bends of said route and either the inverse of the mean distance between successive bends of said route or the inverse of the mean of the radii of curvature of the bends in said route.

Preferably, said cost function is calculated by approximating the bends of said route to circular arcs.

Preferably, said radii of curvature are calculated by using the length of the chords and sagittae of said circular arcs.

Preferably, said mean distance between successive bends is calculated as the mean of the distances between the midpoints of the circular arcs that approximate successive bends in said route.

Preferably, said displaying further comprises associating with each route a respective colour map that depends on the cost function associated with a respective route.

Preferably, said method further comprises:

- determining a plurality of partial cost functions associated with partial sections of said at least one route;
- displaying the individual sections by using colour maps that depend on the partial cost functions.

According to a second aspect, the present invention provides a GPS navigator according to claim 14.

Preferably, said GPS navigator is further configured for displaying the routes on said display by using colour maps that depend on the cost function associated with said routes.

Preferably, said GPS navigator is further configured for determining a plurality of partial cost functions associated with partial sections of said at least one route. Even more preferably, said GPS navigator is further configured for displaying the individual sections by using colour maps that depend on the partial cost functions.

Preferably, said GPS navigator is configured for issuing alert messages whenever said navigator detects the approaching of a route section. Even more preferably, said route section is associated with a high value of the partial cost function, compared with the values of the partial cost functions of other sections of the same route.

According to a further aspect, the present invention also provides a GPS system comprising the GPS navigator according to embodiments of the present invention and a remote server.

Preferably, the remote server comprises a processor and a database. Said processor of said server is configured for extracting said cost function from said database and sending it, over a wireless connection, to said processor of said GPS navigator, and wherein said GPS navigator comprises an accelerometer, said processor of said navigator being configured for sending the values measured by said accelerometer to the processor of said server, and said processor of said server being configured for aggregating the values received from said processor of said GPS navigator and for calibrating the cost function based on said values.

According to a further aspect, the present invention provides a vehicle comprising a navigator according to embodiments of the present invention.

Preferably, said vehicle is an autonomous vehicle.

These and other objects are achieved by means of a GPS navigator and a method for identifying a route as claimed in the appended claims.

BRIEF DESCRIPTION OF THE DRAWINGS

For a better understanding of the present invention, some preferred embodiments thereof will be described below by way of non-limiting example with reference to the annexed drawings, wherein:

- Figure 1 schematically shows a GPS navigator according to the present invention;
- Figure 2 shows the fundamental parameters for approximating the bends with osculating circles;
- Figure 3 graphically shows the parameters for calculating the radius of curvature;
- Figure 4 graphically shows the parameters for calculating the distance between the bends;
- Figure 5 shows an example of calculation of the cost function according to the present invention; and
- Figure 6 illustrates the calculation method according to the present invention.

DETAILED DESCRIPTION OF THE INVENTION

In general, the present invention provides a method suitable for identifying at least one route that, when travelled aboard a vehicle, will limit/reduce the oscillations affecting the vehicle.

In particular, the invention makes it possible to identify a route, given a starting point and a destination point, along which the vehicle will be subjected to fewer and/or smaller oscillations, compared with other routes connecting said starting point to said destination point.

The Applicant observes that by reducing the oscillations it is possible to lower the risk of kinetosis for the passengers of the vehicle.

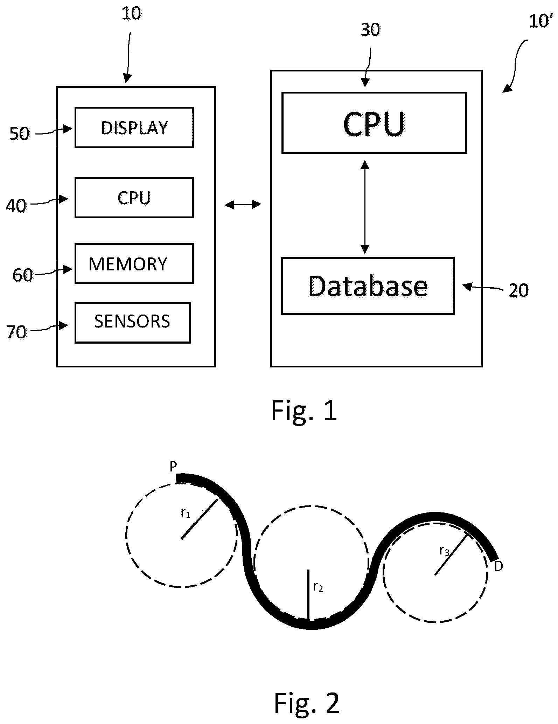

For example, Figure 1 schematically shows a satellite navigator or GPS navigator 10 configured for receiving, preferably through a graphic interface, information about the starting point P and the destination point D according to the prior art. The navigator 10 is also configured for receiving and storing one or more selection preferences as to the calculated and recommended routes. According to the present invention, for example, the navigator is configured for indicating, and storing into a physical memory 20 of the navigator 10, that the passengers aboard the vehicle include a person affected by kinetosis, or, more in general, the GPS navigator 10 is configured for receiving as input an indication regarding the route selection that gives priority to routes having the least probability of causing feelings of discomfort to the occupants of the vehicle due to kinetosis. Such feelings are typically a direct consequence of the vibrations and movements generated by the chosen route. It is known, in fact, that a person suffering from kinetosis is subject to neurological disorders due to the rhythmic or irregular movements of the body when in motion, e.g. when travelling in a vehicle (car, motorcycle, bus, etc.). Such movements create discomfort when they are rhythmic and irregular, e.g. when the vehicle is travelling along routes with many tight bends. Motion sickness in a car usually arises when travelling on suburban or mountain roads. Moreover, it appears that feelings of discomfort can be generated more frequently by autonomous vehicles, since in such vehicles the user may be distracted reading a book or watching a movie.

According to the present invention, the GPS navigator 10 is installed inside a vehicle, e.g. an autonomous vehicle; the GPS navigator 10 comprises an LCD display 50 for displaying a digital map and related information. In general, said display has touch-screen functionality to allow the user to interact with the system via a graphic interface, through which it is possible to enter the starting point and/or the destination point. In many cases, the GPS navigator 10 includes a loudspeaker, not shown in the drawing, through which voice indications about the available route and/or alert messages are provided.

Several types of GPS navigators exist which can be adapted to the present invention, the most common ones are navigators that include a database or a memory and a processor. The database or the memory perform the function of storing a digital geographic map of variable size, while the processor is typically configured for interacting with both the database and the management software of the GPS navigator. Such navigators (also referred to as stand-alone navigators) do not require a wireless connection to determine the routes between the starting and destination points, because all the main functions of the GPS navigator are executed locally.

Other types of GPS navigators, which are mostly intended for smartphones and mobile devices, but which can nevertheless be adapted to the present invention, include, just like those previously described, a memory and a processor. The digital maps are entirely stored in a remote server 10' comprising at least one database, a memory, and a further processor; typically, the processor of the server 10' performs the function of calculating the route between two points and supplying maps and/or instructions to the processor of the mobile device. Smartphones and mobile devices need a wireless connection to be able to operate as a GPS navigator. Some of these smartphones or mobile devices can download maps locally and operate like a navigator of the first type as described above (i.e. as a stand-alone navigator) even in the absence of a wireless connection.

The GPS navigator 10 of the present invention has access to a database 20, which may be either local (as is the case for stand-alone GPS navigators), i.e. stored in a local memory 60, or remote, i.e. stored in the memory of a server 10' (as is the case for mobile devices and smartphones). Said database 20 stores the information of the digital cartographic maps. As aforesaid, the GPS navigator 10 has a local memory 60 that stores the software for the execution of the programs of the navigator. The information contained in the database 20 may preferably be stored in or downloaded to the local memory 60. The GPS navigator 10 is also equipped with a digital processor or CPU (Central Processing Unit) 40 configured for processing the information contained in the digital maps (whether local or remote) and for executing the management software program of the GPS navigator 10. The GPS navigator 10 is also equipped with sensors 70, such as gyroscopes, magnetometers and/or accelerometers on 3 axes to determine accelerations, decelerations and directions when the navigator is in motion. The CPU 40 is in communication with the display 50, the memory 60 and the sensors 70. Through the processor CPU 40, The GPS navigator 10 can communicate with a further CPU 30 of the remote server 10' over a wireless connection, thus obtaining information about the routes or the digital map; preferably, the functions of the CPU 30 may be carried out by the CPU 40, depending of the type of navigator (whether a stand-alone navigator or a mobile device).

The CPU 30 of the server 10', or the CPU 40 of the GPS navigator 10, can receive and process a starting address P and a destination address D; they can also determine, between said points P and D, a plurality n of routes $T_i$ (i=1,2...n). Both points P and D are associated or associable, in the GPS navigator 10, with GPS coordinates known in the art. Said routes $T_i$ will have different characteristics in terms of time of travel, length, route type, number of bends, etc.

In the present invention, the digital map stored in the database 20 or in the local memory 60 associates with a plurality of routes $T_i$, or with a plurality of sections of a single route $T_i$, a plurality of cost functions $C_i$, which are determined as follows. The CPU 30 (or the CPU 40) in communication with the GPS navigator 10 of the present invention is configured for identifying the bends (turns, hairpin bends, etc.) that are present in each individual route $T_i$. In general, each bend of a route can be approximated, for example, to a part of a circular arc having a certain radius, commonly referred to as radius of curvature. More specifically, the radius of curvature of a bend is defined as the radius of that circle, commonly referred to as "osculating circle", which best approximates, locally and at a number of points, part of the bend (Figure 2 shows three osculating circles). The CPU 30 (or the CPU 40) is configured for identifying a plurality of sections that are similar to circular arcs (i.e. the arcs of the osculating circles), the identification of the sections that are similar to circular arcs being executed for the n routes $T_i$. For example, the CPU 30 (or the CPU 40) is configured for identifying the circular arcs by analyzing the relationship between the latitude and longitude coordinates of the route. If the CPU 30 (or the CPU 40) detects that along the route $T_i$ the latitude and longitude coordinates (possibly transformed into UTM coordinates) have a mathematical relationship that can be approximated to a circular arc, then the CPU 30 will identify that portion of the route as a bend. Of course, the identification of all bends is executed for all the n routes $T_i$. Since those bends which have long radii of curvature will likely have a minimal impact on kinetosis, the CPU 30 (or the CPU 40) is preferably configured for filtering the identified bends; for example, a threshold may be set for the radius of curvature, so that, if the radius of curvature identified for a bend exceeds the threshold, then that bend will not be taken into account. In greater detail, the CPU 30 (or the CPU 40) is configured for considering only those bends whose radius of curvature is below a given threshold.

Once the bends of the n routes $T_i$ have been identified, the CPU 30 (or the CPU 40) first executes a calculation analysis in order to calculate a cost function $C_i$ for each route $T_i$, and then associates the calculated cost function $C_i$ with the respective route $T_i$. n cost functions are thus calculated.

The cost function $C_i$ according to the present invention depends on at least one of the following four parameters, or a combination thereof: $Z_i$ "bend type", $E_i$ "number of bends", $N_i$ "bend density", $O_i$ "distance between the bends", the method of calculation of which are detailed below.

In a first embodiment, the cost function $C_i$ is dependent on the parameter $Z_i$, which is a function of the type of each individual bend along the route $T_i$. The type of each bend is in turn dependent on the curvature of said bend and on the circular arc that approximates said bend. The CPU 30 (or the CPU 40) calculates the radii of curvature $r_m^i$, where $r_m^i$ indicates the m-th radius of the i-th route $T_i$ and where m=1,2...$E_i$, and $E_i$ is the number of bends in the i-th route $T_i$, of course with i=1,2...n. The radius of curvature of the m-th bend of the i-th route $T_i$ is calculated as

$$r_m^i = \frac{(c_m^i)^2}{8 \cdot f_m^i} + \frac{f_m^i}{2}$$

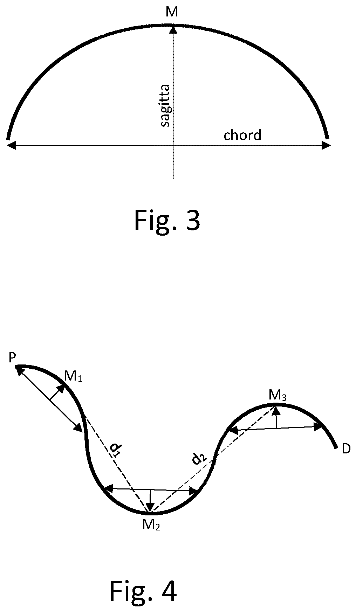

where $c_m^i$ is the length of the chord of the m-th bend of the i-th route $T_i$ and $f_m^i$ is the length of the sagitta of the m-th bend of the same route $T_i$. The chord $c_m^i$ of the bend is that segment which joins the two outermost points of the circular arc that approximates the bend, and the sagitta $f_m^i$ is the distance between the midpoint of the arc and the midpoint of the subtended chord (Figure 3). The chord and the sagitta are also dependent on the direction of travel along the bend, because the circular arc that approximates the bend will be different depending on the direction of travel. In fact, the inner part of a bend has a shorter radius of curvature than the outer part of the bend, and therefore the direction of travel of the vehicle through the bend will have an impact on the calculated radii of curvature.

The parameter "bend type" $Z_i$ is made proportional to the inverse of the arithmetic mean $\bar{r}_i$ of the radii of curvature calculated for the route $T_i$, and said parameter $Z_i$ is also dependent on the variance var_$r_i$ of said radii. It is apparent that, if the mean $\bar{r}_i$ is small, then it means that the route $T_i$ is characterized by tight bends, whereas the variance var_$r_i$ indicates the variability of the radii of curvature $r_i$ with respect to the mean $\bar{r}_i$ along the route $T_i$.

In the first embodiment, therefore, the cost function is proportional to the inverse of the mean of the radii of curvature $\bar{r}_i$. In other words, the cost function grows when the value of the mean of the radii of curvature decreases. Clearly, the navigator should recommend to the user that route which has the lowest cost function (i.e. the route with the highest mean of the radii of curvature) and, for the same mean of the radii of curvature, should suggest the one with the lowest variance.

In a second embodiment of the invention, the function $C_i$ depends, in addition or as an alternative, on the number of bends $E_i$ along the route $T_i$. embodiment the cost function is calculated as the number of bends $E_i$ in the i-th route $T_i$. function grows as the number of bends

$E_i$ in the i-th route $T_i$ increases. Clearly, the navigator should recommend to the user that route which has the lowest cost function, i.e. the route with fewest bends.

In a third embodiment of the present invention, the cost function $C_i$ depends, in addition or as an alternative, on the density $N_i$ of bends in the route $T_i$. $N_i$ is calculated as the number of bends $E_i$ divided by the total length between the first bend $r_1^i$ and the last bend $r_{E_i}^i$ of the route $T_i$. Preferably, the route sections from the starting point P to the first bend $r_1^i$ and from the last bend $r_{E_i}^i$ to the destination point D are not taken into account in the calculation of said total length between the first and last bends. In other words, the cost function grows as the density $N_i$ of bends in the route $T_i$ increases. Therefore, in the third embodiment the navigator should clearly recommend to the user that route which has the lowest bend density, i.e. the route with fewest bends per meter or kilometer.

In a fourth embodiment, the cost function depends, in addition or as an alternative, on the closeness of successive bends, which in turn depends on the distance between the bends represented by the parameter $O_i$. $O_i$ is calculated as the inverse of the mean of the distances between the bends, as will be explained below. It is clear that a person will likely feel sick if the bends follow each other closely; in other words, the cost function grows for routes having close successive bends. Therefore, for each route $T_i$ a value is calculated, which is the mean of the distances between the bends, as the distance in meters in a straight line between the midpoint of a circular arc and the midpoint of the immediately following circular arc (Figure 3 and Figure 4). More in detail, the midpoint $M_1$ (Figure 4) of the first bend is identified, defined as the point of intersection of the sagitta with the circular arc of the bend, then the midpoint $M_2$ of the next bend is identified in the same manner, and the first distance $d_1$ is calculated in a straight line between the two midpoints $M_1$ and $M_2$; the procedure goes on with the calculation of the second distance $d_2$ in a straight line between the midpoint $M_2$ of the second bend and the midpoint $M_3$ of the third bend following the second bend, until the last bend is taken into account, thus calculating $E_i$-1 $d_m^i$ between the bends, where $E_i$ is the number of bends and $d_m^i$ $(m=1,2.. E_i - 1)$ are the distances between the bends of the i-th route $T_i$. The arithmetic mean $\bar{d}_i$ and its variance are then calculated. The parameter $O_i$ is calculated as the inverse of the arithmetic mean $\bar{d}_i$. It is clear that the smaller the mean $\bar{d}_i$, the greater the parameter $O_i$, and this indicates that the bends of the route $T_i$ are close to each other. Together with the information about the total number of bends $E_i$, about the

number of successive bends and how closely they follow each other on average. Alternatively, the distance between two successive bends can be calculated as the distance between the midpoint of the chord of one bend and the midpoint of the chord of the next bend. The parameter $O_i$ may also depend on the direction of travel and on the distance between the respective midpoints of the inner and outer parts of the bends.

Preferably, for each route $T_i$ the values of the cost function $C_i$ are calculated, and the latter are normalized with respect to the maximum value, so that the final cost function is $\tilde{C}_i = C_i/C_{max}$, where $C_{max}$ is the maximum value of the cost functions associated with the routes $T_i$. $\tilde{C}_i$ is clearly a value comprised between 0 and 1.

The calculation of the cost function can be combined using the function

$$ C_i = a \cdot Z_i + b \cdot E_i + c \cdot N_i + d \cdot O_i $$

where **a, b, c, d** are weights having predetermined values, which are used to attribute a heavier weight to one of the above-described four parameters.

The parameters $Z_i$, $E_i$, $N_i$ and $O_i$ are the parameters calculated for the i-th route $T_i$, and preferably each one of them can be normalized with respect to the maximum value of the respective parameter; therefore, in order to execute such normalization, $Z_i$ is divided by the maximum value $Z_{max}$ determined among all the values $Z_i$, executed in order to normalize the other parameters $E_i$, $N_i$ e $O_i$.

The sum of the weights **a+b+c+d = 1**. The weights a, b, c, d may also be configured for emphasizing one of the four parameters, e.g. if **a=b=c=0** and **d=1,** the cost function will exclusively depend on the "distance between the bends" parameter $O_i$. single parameter among $Z_i$, $E_i$ and $N_i$ is to be emphasized.

For example, if a=b=0, c=d=0.5, then the cost function will be $C_i =_i +0.5 \cdot O_i$, i.e. the cost function will likewise depend on the number of bends and on the distance between the bends. Different values of **c** and **d** may be chosen to give more importance to either the total number of bends or the distance between them.

In another example, if a=0.1, b=0.9, c=d=0, then the cost function will be

$$ C_i = 0.1 \cdot Z_i + 0.9 \cdot N_i $$

In this case, the cost function will attribute a lighter weight to the inverse of the mean of the radii of curvature than to the bend density. Different values of **a** and **b** may be chosen to give more importance to either the mean of the radii or the bend density. Preferably the cost function depends on the number of bends along the route and on at least one of the mean of the radii of curvature and the mean distance between the bends of the same route. Other formulae for calculating the cost function may also be used in the present invention, e.g.

the cost function may be equal to the product of the total number of bends and the inverse of the mean of the radii of curvature in a given route,

$$ C_i = Z_i \cdot E_i $$

or the product of the total number of bends and the inverse of the mean distance between the bends,

$$ C_i = O_i \cdot E_i $$

or a weighted sum of the two products. Preferably, in the above-described examples the cost function and/or the parameters $Z_i$, $E_i$, $N_i$ and $O_i$ may also not be normalized.

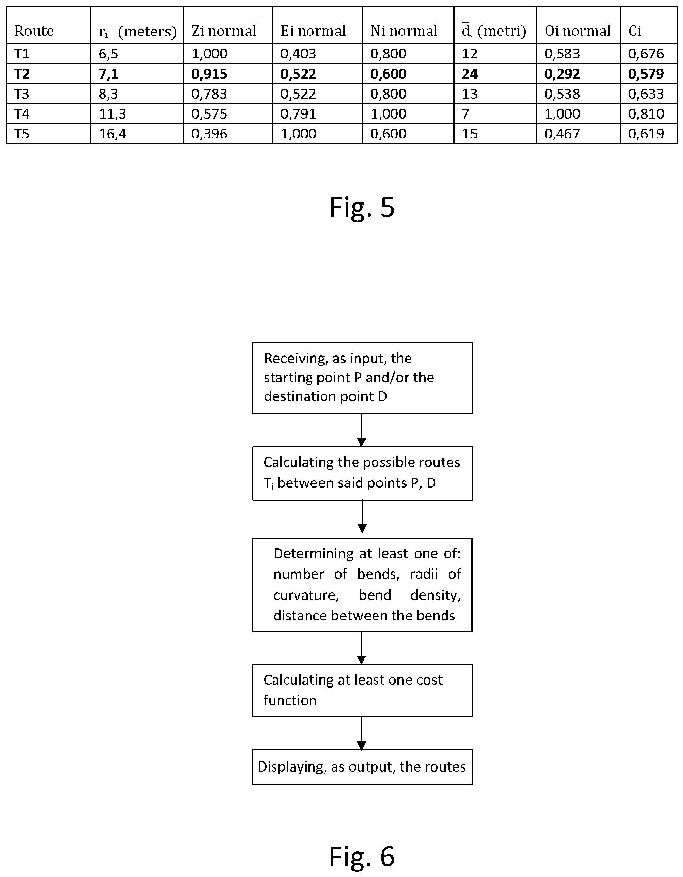

Figure 5 shows, for clarity, an example of calculation of the cost function for 5 possible routes, $T_1$, $T_2$, $T_3$, $T_4$ e $T_5$, using the function

$$ C_i = a \cdot Z_i + b \cdot E_i + c \cdot N_i + d \cdot O_i $$

It has been assumed herein that T1 contains 27 bends with a density of 16 bends per km, T2 contains 35 bends with a density of 12 bends per km, T3 contains 35 bends with a density of 16 bends per km, T4 contains 53 bends with a density of 20 bends per km, and T5 contains 67 bends with a density of 12 bends per km.

The parameters $Z_i$, $E_i$, $N_i$ and $O_i$ have been normalized with respect to the respective maximum values, and the weights have been set as follows: a=0.3, b=0.3, c=0.1 and d=0.3. From Figure 5 it can be inferred that the route with the lowest cost function is $T_2$, and hence $T_2$ is the route that should be given priority and displayed at the top of the list of possible routes, followed by $T_5$, $T_3$, $T_1$ and $T_4$.

The weights a,b,c,d or the type of cost function can be calibrated dynamically based on feedbacks received from the users after travelling the chosen routes. For example, the processor 30 of the remote server 10' is configured for receiving feedbacks, aggregate them and, based on such feedbacks, calibrating the weights in order to give more emphasis to one or more parameters of the cost function or to a specific type of cost function. Furthermore, if the vehicles or the GPS devices are, as is preferable, equipped with sensors 70 such as, gyroscopes and accelerometers on 3 axes (as is typically the case for smartphones), which are useful for calculating accelerations or decelerations occurring when driving through the bends, such values can be transmitted, preferably together with the GPS coordinates where such values are measured, by the processor 40 over a wireless network and received by the processor 30, aggregated, processed and then used for calibrating the weights or parameters of the cost function, according to a closed-loop control scheme.

As aforesaid, the calculated cost functions $C_i$ are associated with the routes $T_i$ and may preferably be stored into the digital map contained in the database 20 or in the memory 60. In this way, the database 20 or the memory 60 are configured for storing a digital map containing one or more cost functions associated with the routes $T_i$. functions need not be calculated every time, but may be calculated only once and then determined (and extracted) by the processors CPU 30 or CPU 40 directly from the digital map contained in the database 20 or the memory 60.

The CPU 40 of the GPS navigator 10 is configured for determining a cost function $C_i$ for each possible route $T_i$, wherein "determining" means, in this case, either receiving over a wireless connection, from the processor CPU 30 and via the processor CPU 40, the cost functions stored in the remote database 20, or directly extracting them, by means of the processor CPU 40, from the digital map stored in the memory 60. With such cost function $C_i$, configured for displaying the possible routes in a list sorted in ascending order of the cost function $C_i$. Therefore, the driver can select the route having the lowest cost function, which is equivalent to selecting the route that will have the least probability of causing motion sickness.

It is known that GPS navigators usually recommend the route with the shortest time of travel; therefore, the GPS navigator 10 of the present invention preferably assigns to each suggested route sorted according to the cost function an indication about its longer time of travel in comparison with the route with the shortest time of travel. Preferably, the GPS navigator should not take into account, and hence should not recommend, any route extending the time of travel (compared with the fastest route) beyond a given threshold.

In another example, the processor 40 is configured for providing information about the cost function $C_i$ in a graphic format, e.g. using a colour map to differentiate a route $T_i$ from another one $T_j$, $i \neq j$, cost function $\tilde{C}_i$.

In another variation of the invention, the cost function may be calculated not only for different routes $T_i$, for different sections $t_k^i$, where **k = 1,2....K** and K are the partial sections of the route $T_i$. generic route $T_i$ **is,** divided, for example, into sections of 500 or 400 or 300 meters each. For each one of such K sections, the partial cost functions $C_k^i$ are calculated and associated, where **k = 1,2....M,** in accordance with one of the above-described examples. Thus, the navigator can give an indication about the possibility of motion sickness along that route $T_i$ by using the colour map associated with the partial cost functions calculated along said route $T_i$. indicate with different shades of the same colour or with different colours those sections where that given route has higher cost functions, i.e. where it is more likely to cause discomfort. This will allow the people in the vehicle to receive, for single sections of a route $T_i$, about the risk of motion sickness, both graphically and through audible alert signals, so that they may decide to make a stop before driving along a section with many bends.

It is clear that the cost functions may be calculated whenever the user selects a destination to be reached, or may be pre-calculated and stored in the digital map (stored in the database 20 or in the memory 60) and then presented graphically to the user via the processor CPU 30 or CPU 40 when the user selects a destination to be reached.

It is also clear that the database 20 or the CPU 30 may either reside locally in the GPS navigator 10 or, as an alternative, reside in a remote computer in communication with the processor CPU 40 connected to the display 50 of the GPS navigator 10. In this latter case, the GPS navigator 10 and its CPU 40 will operate as a client and will only be configured for receiving the information about the destination and the configurations of the navigator, since the server 10' will be the one configured for calculating or determining the possible routes $T_i$ and for transmitting, via the CPU 30, the cost functions or the partial cost functions associated with said routes $T_i$. processor CPU 40 may also be configured for instructing an autonomous vehicle, in which the GPS navigator 10 resides, to take the route having the lowest cost function.

The GPS navigator 10, with its processor CPU 40, may be further configured for allowing the user to turn off the cost function-dependent visualization of the routes, if the processor 40 detects that the possible routes $T_i$ between the starting point P and the destination point D are located within an urban environment.

The method that can be implemented by the GPS navigator 10 is the following (Fig. 6):

receiving as input the starting point P and/or the destination point D;
calculating the possible routes $T_i$ between said points P, D;
for each calculated route $T_i$:

a) determining at least one of: number of bends, radii of curvature, bend density, distance between the bends,
b) calculating the cost function on the basis of at least one of: number of bends, mean of the radii of curvature, bend density, and mean distance between the bends,
c) calculating the cost function for each individual route $T_i$,
d) displaying, as output, the routes in a graphic arrangement dependent on the cost function or, as an alternative, displaying the routes in a graphic format by using a color map dependent on the cost function.

Lastly, it is apparent that the GPS navigator 10 and the method according to the present invention may be subject to modifications and variations, without however departing from the protection scope defined by the claims.

For example, the bends or the radii of curvature may be identified with equivalent results by using alternative methods or formulae, e.g. by using clothoids instead of, or in addition to, osculating circles. The distance between the bends may be calculated by using the distance between the midpoints of the chords of the bends. The cost function may depend on a function other than, but similar to, the arithmetic mean of the radii of curvature.

It should be noted that the above-described method can also be executed by means of a computing device lacking a GPS device; for example, such computing device may be a personal computer or a laptop. In particular, such computing device may require entering the starting point P and a destination point D on a map stored in a database.

After receiving the starting point P and the destination point, such computer identifies a plurality of possible routes Ti (between said starting point P and said destination point D) on said map and determines at least one cost function Ci associated with at least one route Ti, as described above. At least one route Ti is then displayed on a user display of the computing device. Preferably, the at least one route Ti is displayed in a graphic arrangement that is dependent on the previously determined cost functions Ci.

Preferably, such computing device can send at least one route of the plurality of routes Ti to a GPS navigator or to a device equipped with a GPS navigator.

**Claims**

1. A method for identifying at least one route that will limit the oscillations of a vehicle, said method comprising:

    - providing a starting point (P) and a destination point (D) on a map stored in a database;
    - identifying a plurality of possible routes (Ti) between said starting point (P) and said destination point (D);
    - determining, based on a cost function ($C_i$), at least one cost associated with each route ($T_i$) in the plurality of possible routes,
    - wherein said cost function ($C_i$) depends at least on a distance between bends ($O_i$) and has higher values for routes having shorter distances between successive bends ($O_i$);
    - displaying the routes ($T_i$) on a user display in a list sorted in ascending order of the determined costs, or a graphic format based on the determined costs of the cost function ($C_i$), thereby helping a driver to select the route that will have the least probability of causing motion sickness.

2. The method according to claim 1, wherein said cost function ($C_i$) further depends on at least one of a number of bends ($E_i$), a type of bends ($Z_i$), and a density of the bends ($N_i$) of said route ($T_i$).

3. The method according to claim 1, wherein said cost function ($C_i$) is directly proportional to the inverse of the mean of the radii of curvature ($\bar{r}_i$) of the bends in said route ($T_i$).

4. The method according to claim 1, wherein said cost function ($C_i$) is directly proportional to the inverse of the mean distance between successive bends of said route (Ti).

5. The method according to claims 1-4, wherein said method comprises associating with each route an indication about the time of travel, with respect to the route with the shortest time of travel.

6. The method according to the preceding claim, wherein said method further comprises filtering out those routes which extend the time of travel beyond a predefined time threshold.

7. The method according to any one of the preceding claims, wherein said method further comprises identifying routes in the plurality of routes ($T_i$), wherein each route comprises bends whose radius of curvature ( $r_m^i$ ) is greater than a threshold radius.

8. The method according to any one of the preceding claims, wherein said cost function ($C_i$) depends on the product of the number of bends of said route ($T_i$) and either the inverse of the mean distance ($\bar{d}_i$) between successive bends of said route or the inverse of the mean ($\bar{r}_i$) of the radii of curvature of the bends in said route.

9. The method according to any one of the preceding claims, wherein said cost is calculated by approximating the bends of said route (Ti) to circular arcs.

10. The method according to the preceding claim, wherein said radii of curvature ( $r_m^i$ ) are calculated by using the length of the chords ( $c_m^i$ ) and sagittae ( $f_m^i$ ) of said circular arcs.

11. The method according to claim 8, wherein said mean distance ($\bar{d}_i$) between successive bends is calculated as the mean of the distances between the midpoints of the circular arcs that approximate successive bends in said route ($T_i$).

12. The method according to any one of the preceding claims, wherein said displaying in said graphic format comprises associating with each route ($T_i$) a respective colour map that depends on the cost associated with a respective route ($T_i$).

13. The method according to any one of the preceding claims, wherein said method further comprises:

- determining a plurality of partial costs associated with partial sections ( $t_k^i$ ) of said at least one route ($T_i$);

- displaying the individual partial sections ( $t_k^i$ ) by using colour maps that depend on the partial costs.

14. A GPS navigator (10) suitable for identifying at least one route that will limit the oscillations of a vehicle, comprising a display (50) and a processor (40), wherein:

- said processor (40) is configured for displaying, on said display (50), a plurality of possible routes ($T_i$) between a starting point (P) and a destination point (D), said processor (40) being further configured for determining, based on a cost function ($C_i$), at least one cost associated with at least one route ($T_i$),

- wherein each cost function ($C_i$) depends on at least a distance ($O_i$) between bends and has higher values for routes having shorter distances between successive bends ($O_i$);

- said processor (40) is further configured for displaying the routes ($T_i$) on a user display in a list sorted in ascending order of the determined costs, or a graphic format based on the determined costs of the cost function ($C_i$), thereby helping a driver to select the route that will have the least probability of causing motion sickness.

15. GPS navigator (10) according to the preceding claim wherein the cost function ($C_i$) further depends on at least one of a number of bends **($E_i$),** a type of bends ($Z_i$), and a density of the bends ($N_i$) of said route **($T_i$).**

16. GPS navigator (10) according to the preceding claim, wherein said cost function ($C_i$) is directly proportional to the inverse of the mean of the radii of curvature ($\bar{r}_i$) of the bends in said route ($T_i$).

17. GPS navigator (10) according to claim 14, wherein said cost function ($C_i$) is directly proportional to the inverse of the mean distance between successive bends of said route ($T_i$).

18. GPS navigator (10) according to one of claims 14-17, wherein said cost function ($C_i$) depends on the pro-

duct of the number of bends of said route ($T_i$) and either the inverse of the mean distance ($\bar{d}_i$) between successive bends of said route or the inverse of the mean ($\bar{r}_i$) of the radii of curvature of the bends in said route.

19. GPS navigator (10) according to one of claims 14-18, wherein said cost function ($C_i$) depends only on those bends whose radius of curvature ( $r_m^i$ ) is greater than a threshold.

20. GPS navigator (10) according to one of claims 14-19, wherein said cost is calculated by approximating the bends of said route ($T_i$) to circular arcs.

21. GPS navigator (10) according to the preceding claim, wherein said radii of curvature ( $r_m^i$ ) are calculated by using the length of the chords ( $c_m^i$ ) and sagittae ( $f_m^i$ ) of said circular arcs.

22. GPS navigator (10) according to claim 17, wherein said mean distance ($\bar{d}_i$) between successive bends is calculated as the mean of the distances between the midpoints of the circular arcs that approximate successive bends in said route ($T_i$).

23. GPS navigator (10) according to one of claims 14-22, wherein said graphic format includes colour maps that depend on the cost associated with said routes ($T_i$).

24. GPS navigator (10) according to one of claims 14-23, wherein said GPS navigator (10) is configured for determining a plurality of partial costs associated with partial sections ( $t_k^i$ ) of said at least one route ($T_i$), and said GPS navigator (10) is configured for displaying the individual partial sections ( $t_k^i$ ) by using colour maps that depend on the partial cost.

25. GPS navigator (10) according to claim 24, wherein said GPS navigator (10) is configured for issuing alert messages whenever said GPS navigator (10) detects the approaching of a route section ( $t_k^i$ ), said route section ( $t_k^i$ ) being associated with a high value of the partial cost , compared with the values of the partial cost of other sections of the same route ( $t_k^i$ ).

26. A GPS system comprising the GPS navigator (10) according to one of claims 14-25 and a remote server (10') comprising a processor (30) and a database (20), said processor (30) of said server (10') being configured for extracting said cost function ($C_i$) from said database (20) and sending it, over a wireless connection, to said processor (40) of said GPS navigator (10), and wherein said GPS navigator (10) comprises an accelerometer (70), said processor (40) of said navigator (10) being configured for sending the values measured by said accelerometer to the processor (30) of said server (10'), and said processor (30) of said server (10') being configured for aggregating the values received from said processor (40) of said GPS navigator (10) and for calibrating the cost function ($C_i$) based on said values.

27. A vehicle comprising a GPS navigator according to any one of claims 14 and 25.

28. The vehicle according to the preceding claim, wherein said vehicle is an autonomous vehicle.


**Patentansprüche**

1. Ein Verfahren zur Identifizierung mindestens einer Route, die die Schwingungen eines Fahrzeugs begrenzen wird, wobei das Verfahren umfasst:

   - Bereitstellen eines Startpunkts (P) und eines Zielpunkts (D) auf einer in einer Datenbank gespeicherten Karte;
   - Identifizieren einer Vielzahl von möglichen Routen ($T_i$) zwischen dem Startpunkt (P) und dem Zielpunkt (D);
   - Bestimmen, basierend auf einer Kostenfunktion ($C_i$), mindestens einer mit jeder Route ($T_i$) in der Vielzahl von möglichen Routen verbundenen Kosten,
   - wobei die Kostenfunktion ($C_i$) zumindest von einem Abstand zwischen Kurven ($O_i$) abhängt und höhere Werte für Routen mit kürzeren Abständen zwischen aufeinanderfolgenden Kurven ($O_i$) aufweist;
   - Anzeigen der Routen ($T_i$) auf einer Benutzeranzeige in einer nach den bestimmten Kosten sortierten aufsteigenden Liste oder in einem grafischen Format, das auf den bestimmten Kosten der Kostenfunktion ($C_i$) basiert, wodurch einem Fahrer geholfen wird, die Route auszuwählen, die die geringste Wahrscheinlichkeit hat, Reisekrankheit zu verursachen.

2. Verfahren nach Anspruch 1, wobei die Kostenfunktion ($C_i$) ferner von mindestens einem aus einer Anzahl von Kurven ($E_i$), einer Art von Kurven ($Z_i$) und einer Dichte der Kurven ($N_i$) der Route ($T_i$) abhängt.

3. Verfahren nach Anspruch 1, wobei die Kostenfunktion ($C_i$) direkt proportional zum Kehrwert des Mittelwerts der Krümmungsradien ($\bar{r}_i$) der Kurven in der Route ($T_i$) ist.

4. Verfahren nach Anspruch 1, wobei die Kostenfunktion ($C_i$) direkt proportional zum Kehrwert des mittleren Abstands zwischen aufeinanderfolgenden Kurven der Route ($T_i$) ist.

5. Verfahren nach den Ansprüchen 1-4, wobei das Verfahren das Zuordnen einer Angabe über die Fahrzeit zu jeder Route umfasst, bezogen auf die Route mit der kürzesten Fahrzeit.

6. Verfahren nach dem vorhergehenden Anspruch, wobei das Verfahren ferner das Herausfiltern jener Routen umfasst, die die Fahrzeit über einen vordefinierten Zeitschwellenwert hinaus verlängern.

7. Verfahren nach einem der vorhergehenden Ansprüche, wobei das Verfahren ferner das Identifizieren von Routen in der Vielzahl von Routen ($T_i$) umfasst, wobei jede Route Kurven umfasst, deren Krümmungsradius ($\mathbf{r_m^i}$) größer als ein Schwellenradius ist.

8. Verfahren nach einem der vorhergehenden Ansprüche, wobei die Kostenfunktion ($C_i$) vom Produkt aus der Anzahl der Kurven der Route ($T_i$) und entweder dem Kehrwert des mittleren Abstands ($\bar{d}_i$) zwischen aufeinanderfolgenden Kurven der Route oder dem Kehrwert des Mittelwerts ($\bar{r}_i$) der Krümmungsradien der Kurven in der Route abhängt.

9. Verfahren nach einem der vorhergehenden Ansprüche, wobei die Kosten durch Annäherung der Kurven der Route ($T_i$) an Kreisbögen berechnet werden.

10. Verfahren nach dem vorhergehenden Anspruch, wobei die Krümmungsradien ($\mathbf{r_m^i}$) unter Verwendung der Länge der Sehnen ($\mathbf{c_m^i}$) und der Pfeilhöhen ($\mathbf{f_m^i}$) der Kreisbögen berechnet werden.

11. Verfahren nach Anspruch 8, wobei der mittlere Abstand ($\bar{d}_i$) zwischen aufeinanderfolgenden Kurven als der Mittelwert der Abstände zwischen den Mittelpunkten der Kreisbögen berechnet wird, die aufeinanderfolgende Kurven in der Route ($T_i$) annähern.

12. Verfahren nach einem der vorhergehenden Ansprüche, wobei das Anzeigen in dem grafischen Format das Zuordnen einer jeweiligen Farbkarte zu jeder Route ($T_i$) umfasst, die von den mit einer jeweiligen Route ($T_i$) verbundenen Kosten abhängt.

**13.** Verfahren nach einem der vorhergehenden Ansprüche, wobei das Verfahren ferner umfasst:

- Bestimmen einer Vielzahl von Teilkosten, die mit Teilabschnitten ( $t_k^i$ ) der mindestens einen Route ($T_i$) verbunden sind;

- Anzeigen der einzelnen Teilabschnitte ( $t_k^i$ ) unter Verwendung von Farbkarten, die von den Teilkosten abhängen.

**14.** Ein GPS-Navigationsgerät (10), das geeignet ist, mindestens eine Route zu identifizieren, die die Schwingungen eines Fahrzeugs begrenzen wird, umfassend eine Anzeige (50) und einen Prozessor (40), wobei:

- der Prozessor (40) konfiguriert ist, auf der Anzeige (50) eine Vielzahl von möglichen Routen ($T_i$) zwischen einem Startpunkt (P) und einem Zielpunkt (D) anzuzeigen, wobei der Prozessor (40) ferner konfiguriert ist, basierend auf einer Kostenfunktion ($C_i$), mindestens eine mit mindestens einer Route ($T_i$) verbundene Kosten zu bestimmen,
- wobei jede Kostenfunktion ($C_i$) zumindest von einem Abstand ($O_i$) zwischen Kurven abhängt und höhere Werte für Routen mit kürzeren Abständen zwischen aufeinanderfolgenden Kurven ($O_i$) aufweist;
- der Prozessor (40) ferner konfiguriert ist, die Routen ($T_i$) auf einer Benutzeranzeige in einer nach den bestimmten Kosten sortierten aufsteigenden Liste oder in einem grafischen Format anzuzeigen, das auf den bestimmten Kosten der Kostenfunktion ($C_i$) basiert, wodurch einem Fahrer geholfen wird, die Route auszuwählen, die die geringste Wahrscheinlichkeit hat, Reisekrankheit zu verursachen.

**15.** GPS-Navigationsgerät (10) nach dem vorhergehenden Anspruch, wobei die Kostenfunktion ($C_i$) ferner von mindestens einem aus einer Anzahl von Kurven ($E_i$), einer Art von Kurven ($Z_i$) und einer Dichte der Kurven ($N_i$) der Route ($T_i$) abhängt.

**16.** GPS-Navigationsgerät (10) nach dem vorhergehenden Anspruch, wobei die Kostenfunktion ($C_i$) direkt proportional zum Kehrwert des Mittelwerts der Krümmungsradien ($\bar{r}_i$) der Kurven in der Route ($T_i$) ist.

**17.** GPS-Navigationsgerät (10) nach Anspruch 14, wobei die Kostenfunktion ($C_i$) direkt proportional zum Kehrwert des mittleren Abstands zwischen aufeinanderfolgenden Kurven der Route ($T_i$) ist.

**18.** GPS-Navigationsgerät (10) nach einem der Ansprüche 14-17, wobei die Kostenfunktion ($C_i$) vom Produkt aus der Anzahl der Kurven der Route ($T_i$) und entweder dem Kehrwert des mittleren Abstands ($\bar{d}_i$) zwischen aufeinanderfolgenden Kurven der Route oder dem Kehrwert des Mittelwerts ($\bar{r}_i$) der Krümmungsradien der Kurven in der Route abhängt.

**19.** GPS-Navigationsgerät (10) nach einem der Ansprüche 14-18, wobei die Kostenfunktion ($C_i$) nur von jenen Kurven abhängt, deren Krümmungsradius ( $r_m^i$ ) größer als ein Schwellenwert ist.

**20.** GPS-Navigationsgerät (10) nach einem der Ansprüche 14-19, wobei die Kosten durch Annäherung der Kurven der Route (Ti) an Kreisbögen berechnet werden.

**21.** GPS-Navigationsgerät (10) nach dem vorhergehenden Anspruch, wobei die Krümmungsradien ( $r_m^i$ ) unter Verwendung der Länge der Sehnen ( $c_m^i$ ) und der Pfeilhöhen ( $f_m^i$ ) der Kreisbögen berechnet werden.

**22.** GPS-Navigationsgerät (10) nach Anspruch 17, wobei der mittlere Abstand ($\bar{d}_i$) zwischen aufeinanderfolgenden Kurven als der Mittelwert der Abstände zwischen den Mittelpunkten der Kreisbögen berechnet wird, die aufeinanderfolgende Kurven in der Route ($T_i$) annähern.

**23.** GPS-Navigationsgerät (10) nach einem der Ansprüche 14-22, wobei das grafische Format Farbkarten umfasst, die von den mit den Routen ($T_i$) verbundenen Kosten abhängen.

**24.** GPS-Navigationsgerät (10) nach einem der Ansprüche 14-23, wobei das GPS-Navigationsgerät (10) konfiguriert ist, eine Vielzahl von Teilkosten zu bestimmen, die mit Teilabschnitten ( $t_k^i$ ) der mindestens einen Route ($T_i$) verbunden sind, und das GPS-Navigationsgerät (10) konfiguriert ist, die einzelnen Teilabschnitte ( $t_k^i$ ) unter Verwendung von Farbkarten anzuzeigen, die von den Teilkosten abhängen.

**25.** GPS-Navigationsgerät (10) nach Anspruch 24, wobei das GPS-Navigationsgerät (10) konfiguriert ist, Warnmeldungen auszugeben, wann immer das GPS-Navigationsgerät (10) die Annäherung an einen Routenabschnitt ( $t_k^i$ ) erkennt, wobei der Routenabschnitt ( $t_k^i$ ) mit einem hohen Wert der Teilkosten verbunden ist, verglichen mit den Werten der Teilkosten anderer Abschnitte derselben Route ( $t_k^i$ ).

26. Ein GPS-System, umfassend das GPS-Navigationsgerät (10) nach einem der Ansprüche 14-25 und einen entfernten Server (10'), der einen Prozessor (30) und eine Datenbank (20) umfasst, wobei der Prozessor (30) des Servers (10') konfiguriert ist, die Kostenfunktion (C_i) aus der Datenbank (20) zu extrahieren und sie über eine drahtlose Verbindung an den Prozessor (40) des GPS-Navigationsgeräts (10) zu senden, und wobei das GPS-Navigationsgerät (10) einen Beschleunigungsmesser (70) umfasst, wobei der Prozessor (40) des Navigationsgeräts (10) konfiguriert ist, die vom Beschleunigungsmesser gemessenen Werte an den Prozessor (30) des Servers (10') zu senden, und der Prozessor (30) des Servers (10') konfiguriert ist, die vom Prozessor (40) des GPS-Navigationsgeräts (10) empfangenen Werte zu aggregieren und die Kostenfunktion (Ci) basierend auf diesen Werten zu kalibrieren.

27. Ein Fahrzeug, umfassend ein GPS-Navigationsgerät nach einem der Ansprüche 14 und 25.

28. Fahrzeug nach dem vorhergehenden Anspruch, wobei das Fahrzeug ein autonomes Fahrzeug ist.

**Revendications**

1. Procédé d'identification d'au moins un itinéraire qui limitera les oscillations d'un véhicule, ledit procédé comprenant :

   - la fourniture d'un point de départ (P) et d'un point de destination (D) sur une carte stockée dans une base de données ;
   - l'identification d'une pluralité d'itinéraires possibles (T_i) entre ledit point de départ (P) et ledit point de destination (D) ;
   - la détermination, sur la base d'une fonction de coût (C_i), d'au moins un coût associé à chaque itinéraire (T_i) dans la pluralité d'itinéraires possibles,
   - dans lequel ladite fonction de coût (C_i) dépend au moins d'une distance entre les virages (O_i) et a des valeurs plus élevées pour les itinéraires ayant des distances plus courtes entre les virages successifs (O_i) ;
   - l'affichage des itinéraires (T_i) sur un écran utilisateur dans une liste triée par ordre croissant des coûts déterminés, ou dans un format graphique basé sur le coût déterminé de la fonction de coût (C_i), aidant ainsi un conducteur à sélectionner l'itinéraire qui aura la plus faible probabilité de provoquer le mal des transports.

2. Procédé selon la revendication 1, dans lequel ladite fonction de coût (C_i) dépend en outre d'au moins l'un parmi un nombre de virages (E_i), un type de virages (Z_i), et une densité des virages (N_i) dudit itinéraire (T_i).

3. Procédé selon la revendication 1, dans lequel ladite fonction de coût (C_i) est directement proportionnelle à l'inverse de la moyenne des rayons de courbure ($\bar{r}_i$) des virages dans ledit itinéraire (T_i).

4. Procédé selon la revendication 1, dans lequel ladite fonction de coût (C_i) est directement proportionnelle à l'inverse de la distance moyenne entre les virages successifs dudit itinéraire (T_i).

5. Procédé selon les revendications 1 à 4, dans lequel ledit procédé comprend l'association à chaque itinéraire d'une indication sur le temps de trajet, par rapport à l'itinéraire ayant le temps de trajet le plus court.

6. Procédé selon la revendication précédente, dans lequel ledit procédé comprend en outre le filtrage des itinéraires qui prolongent le temps de trajet au-delà d'un seuil de temps prédéfini.

7. Procédé selon l'une quelconque des revendications précédentes, dans lequel ledit procédé comprend en outre l'identification d'itinéraires dans la pluralité d'itinéraires (T_i), dans lequel chaque itinéraire comprend des virages dont le rayon de courbure ( $r_m^i$ ) est supérieur à un rayon seuil.

8. Procédé selon l'une quelconque des revendications précédentes, dans lequel ladite fonction de coût (C_i) dépend du produit du nombre de virages dudit itinéraire (T_i) et soit de l'inverse de la distance moyenne ($\bar{d}_i$) entre les virages successifs dudit itinéraire, soit de l'inverse de la moyenne ($\bar{r}_i$) des rayons de courbure des virages dans ledit itinéraire.

9. Procédé selon l'une quelconque des revendications précédentes, dans lequel ledit coût est calculé en approximant les virages dudit itinéraire (T_i) par des arcs de cercle.

10. Procédé selon la revendication précédente, dans lequel lesdits rayons de courbure ( $r_m^i$ ) sont calculés en utilisant la longueur des cordes ( $c_m^i$ ) et les flèches ( $f_m^i$ ) desdits arcs de cercle.

11. Procédé selon la revendication 8, dans lequel ladite

distance moyenne ($\overline{d}_i$) entre les virages successifs est calculée comme la moyenne des distances entre les points médians des arcs de cercle qui approximent les virages successifs dans ledit itinéraire ($T_i$).

**12.** Procédé selon l'une quelconque des revendications précédentes, dans lequel ledit affichage dans ledit format graphique comprend l'association à chaque itinéraire ($T_i$) d'une carte de couleurs respective qui dépend du coût associé à un itinéraire respectif ($T_i$).

**13.** Procédé selon l'une quelconque des revendications précédentes, dans lequel ledit procédé comprend en outre :

- la détermination d'une pluralité de coûts partiels associés à des sections partielles ( $t_k^i$ ) dudit au moins un itinéraire ($T_i$) ;
- l'affichage des sections partielles individuelles ( $t_k^i$ ) en utilisant des cartes de couleurs qui dépendent des coûts partiels.

**14.** Un navigateur GPS (10) apte à identifier au moins un itinéraire qui limitera les oscillations d'un véhicule, comprenant un écran (50) et un processeur (40), dans lequel :

- ledit processeur (40) est configuré pour afficher, sur ledit écran (50), une pluralité d'itinéraires possibles ($T_i$) entre un point de départ (P) et un point de destination (D), ledit processeur (40) étant en outre configuré pour déterminer, sur la base d'une fonction de coût ($C_i$), au moins un coût associé à au moins un itinéraire ($T_i$),
- dans lequel chaque fonction de coût ($C_i$) dépend au moins d'une distance ($O_i$) entre les virages et a des valeurs plus élevées pour les itinéraires ayant des distances plus courtes entre les virages successifs ($O_i$) ;
- ledit processeur (40) est en outre configuré pour afficher les itinéraires ($T_i$) sur un écran utilisateur dans une liste triée par ordre croissant des coûts déterminés, ou un format graphique basé sur les coûts déterminés de la fonction de coût ($C_i$), aidant ainsi un conducteur à sélectionner l'itinéraire qui aura la plus faible probabilité de provoquer le mal des transports.

**15.** Navigateur GPS (10) selon la revendication précédente, dans lequel la fonction de coût ($C_i$) dépend en outre d'au moins l'un parmi un nombre de virages **($E_i$)**, un type de virages ($Z_i$), et une densité des virages ($N_i$) dudit itinéraire **($T_i$).**

**16.** Navigateur GPS (10) selon la revendication précédente, dans lequel ladite fonction de coût ($C_i$) est directement proportionnelle à l'inverse de la moyenne des rayons de courbure ($\overline{r}_i$) des virages dans ledit itinéraire ($T_i$).

**17.** Navigateur GPS (10) selon la revendication 14, dans lequel ladite fonction de coût ($C_i$) est directement proportionnelle à l'inverse de la distance moyenne entre les virages successifs dudit itinéraire ($T_i$).

**18.** Navigateur GPS (10) selon l'une des revendications 14 à 17, dans lequel ladite fonction de coût ($C_i$) dépend du produit du nombre de virages dudit itinéraire ($T_i$) et soit de l'inverse de la distance moyenne ($\overline{d}_i$) entre les virages successifs dudit itinéraire, soit de l'inverse de la moyenne (ii) des rayons de courbure des virages dans ledit itinéraire.

**19.** Navigateur GPS (10) selon l'une des revendications 14 à 18, dans lequel ladite fonction de coût ($C_i$) dépend uniquement des virages dont le rayon de courbure ( $r_m^i$ ) est supérieur à un seuil.

**20.** Navigateur GPS (10) selon l'une des revendications 14 à 19, dans lequel ledit coût est calculé en approximant les virages dudit itinéraire ($T_i$) par des arcs de cercle.

**21.** Navigateur GPS (10) selon la revendication précédente, dans lequel lesdits rayons de courbure ( $r_m^i$ ) sont calculés en utilisant la longueur des cordes ( $c_m^i$ ) et les flèches ( $f_m^i$ ) desdits arcs de cercle.

**22.** Navigateur GPS (10) selon la revendication 17, dans lequel ladite distance moyenne ($\overline{d}_i$) entre les virages successifs est calculée comme la moyenne des distances entre les points médians des arcs de cercle qui approximent les virages successifs dans ledit itinéraire ($T_i$).

**23.** Navigateur GPS (10) selon l'une des revendications 14 à 22, dans lequel ledit format graphique inclut des cartes de couleurs qui dépendent du coût associé auxdits itinéraires ($T_i$).

**24.** Navigateur GPS (10) selon l'une des revendications 14 à 23, dans lequel ledit navigateur GPS (10) est configuré pour déterminer une pluralité de coûts partiels associés à des sections partielles ( $t_k^i$ ) dudit au moins un itinéraire ($T_i$), et ledit navigateur GPS (10) est configuré pour afficher les sections partielles individuelles ( $t_k^i$ ) en utilisant des cartes de couleurs qui dépendent du coût partiel.

**25.** Navigateur GPS (10) selon la revendication 24, dans lequel ledit navigateur GPS (10) est configuré pour émettre des messages d'alerte chaque fois que ledit navigateur GPS (10) détecte l'approche d'une section d'itinéraire ( $\mathbf{t_k^i}$ ), ladite section d'itinéraire ( $\mathbf{t_k^i}$ ) étant associée à une valeur élevée du coût partiel, par rapport aux valeurs du coût partiel d'autres sections du même itinéraire ( $\mathbf{t_k^i}$ ).

26. Un système GPS comprenant le navigateur GPS (10) selon l'une des revendications 14 à 25 et un serveur distant (10') comprenant un processeur (30) et une base de données (20), ledit processeur (30) dudit serveur (10') étant configuré pour extraire ladite fonction de coût ($C_i$) de ladite base de données (20) et l'envoyer, via une connexion sans fil, audit processeur (40) dudit navigateur GPS (10), et dans lequel ledit navigateur GPS (10) comprend un accéléromètre (70), ledit processeur (40) dudit navigateur (10) étant configuré pour envoyer les valeurs mesurées par ledit accéléromètre au processeur (30) dudit serveur (10'), et ledit processeur (30) dudit serveur (10') étant configuré pour agréger les valeurs reçues dudit processeur (40) dudit navigateur GPS (10) et pour calibrer la fonction de coût ($C_i$) sur la base desdites valeurs.

27. Un véhicule comprenant un navigateur GPS selon l'une quelconque des revendications 14 et 25.

28. Véhicule selon la revendication précédente, dans lequel ledit véhicule est un véhicule autonome.

Fig. 1

Fig. 2

Fig. 3

Fig. 4

| Route | $\bar{r}_i$ (meters) | Zi normal | Ei normal | Ni normal | $\bar{d}_i$ (metri) | Oi normal | Ci |
|---|---|---|---|---|---|---|---|
| T1 | 6,5 | 1,000 | 0,403 | 0,800 | 12 | 0,583 | 0,676 |
| **T2** | **7,1** | **0,915** | **0,522** | **0,600** | **24** | **0,292** | **0,579** |
| T3 | 8,3 | 0,783 | 0,522 | 0,800 | 13 | 0,538 | 0,633 |
| T4 | 11,3 | 0,575 | 0,791 | 1,000 | 7 | 1,000 | 0,810 |
| T5 | 16,4 | 0,396 | 1,000 | 0,600 | 15 | 0,467 | 0,619 |

# Fig. 5

Receiving, as input, the starting point P and/or the destination point D

↓

Calculating the possible routes $T_i$ between said points P, D

↓

Determining at least one of: number of bends, radii of curvature, bend density, distance between the bends

↓

Calculating at least one cost function

↓

Displaying, as output, the routes

# Fig. 6

**EP 4 237 797 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110231086 A1
- US 20070038367 A1
- WO 2016135561 A1
- US 2009222198 A1